# EUROPEAN PATENT SPECIFICATION

(11) **EP 2 518 310 B1**
(45) Date of publication and mention of the grant of the patent: **03.06.2015**
(21) Application number: 09808941.0
(22) Date of filing: 21.12.2009
(51) Int. Cl.: F03D 9/00

(54) **ELECTRICAL INTERCONNECTION SYSTEM BETWEEN AT LEAST ONE ELECTRICITY GENERATOR AND ONE ELECTRICITY TRANSFER SYSTEM, IN A MARINE ENVIRONMENT**
ELEKTRISCHES VERBINDUNGSSYSTEM ZWISCHEN MINDESTENS EINEM STROMGENERATOR UND EINEM STROMTRANSPORTSYSTEM IN EINER MEERESUMGEBUNG
SYSTÈME D'INTERCONNEXION ÉLECTRIQUE ENTRE AU MOINS UN GÉNÉRATEUR D'ÉNERGIE ÉLECTRIQUE ET UN SYSTÈME DE TRANSFERT D'ÉNERGIE ÉLECTRIQUE, DANS UN ENVIRONNEMENT MARIN

(43) Date of publication of application: 31.10.2012
(73) Proprietor: FUNDACIÓN TECNALIA RESEARCH & INNOVATION, 20009 San Sebastian (Guipuzcoa) (ES)
(72) Inventor: IBAÑEZ EREÑO, Pedro, E-48170 Zamudio (Vizcaya) (ES); RICCI, Pierpaolo, E-48170 Zamudio (Vizcaya) (ES); PEREZ MORAN, Germán, E-48170 Zamudio (Vizcaya) (ES); MARINO BILBAO, Iker, E-48170 Zamudio (Vizcaya) (ES); VILLATE MARTINEZ, José, Luis, E-48170 Zamudio (Vizcaya) (ES)
(74) Representative: Carpintero Lopez, Francisco
(86) International application number: PCT/ES2009/070612
(87) International publication number: WO 2011/076957

(56) References cited:
- WO-A1-98/32967
- WO-A1-02/073032
- WO-A1-2007/009464
- GB-A- 1 492 427

## Description

### Technical Field of the Invention

The invention is comprised in the technical field of electric power generation in a marine environment.

### Background of the Invention

Due to the need to find alternatives to the traditional ways to produce power (for example, those based on fossil fuels or nuclear energy, with the environmental drawbacks and risks that they involve), energies have been developed which are sometimes known as renewable energies and which include, for example, wind energy, the energy obtained from sea waves or from marine currents, etc. For the production of this type of "alternative energies", offshore installations are increasingly used, i.e., installations in the sea. For example, currently, there are already several wind farms, each comprising a large number of wind turbines or wind generators installed in the sea, sometimes at a considerable distance from the coast. It is considered that power generation in marine installations, i.e., located in the sea (or in lakes), is something which will become increasingly usual. However, in addition to the problem of the installation of the actual generator equipment (i.e., for example, wind turbines or devices capturing the movement of the waves or currents and transforming it into electric power) in the sea, there is the problem of how to take the power produced towards the consumers and, more specifically, how to take the power produced from the site at which it is produced (in the sea) to a point of connection to a distribution network on land. Underwater electric cables are normally used for this purpose.

However, to set up and maintain the connection between one or several power generators (for example, one or several wind turbines, or one or several generators driven by the movement of the waves or by marine currents) and an underwater electric cable is a task which is sometimes complicated and can require the use of divers or remotely controlled robots.

In marine wind farms such as those currently existing in Northern Europe, the depths do not usually exceed 20 m, therefore the underwater operations can be carried out by divers without difficulty, with the support of ships containing the means necessary for that purpose. The installation of underwater cable is usually carried out with cable ships specializing in it which cast the cable on the sea with high precision.

In the locations at small depth such as those mentioned, the cables go from the wind generators to an electrical substation which is usually in the wind farm itself, assembled on a structure similar to that supporting the wind generators, and the transport cable goes from said electrical substation towards land. However, in the case of greater depths, when the substation is on land most of the time, the need arises to set up a connection between the power generators and the underwater cable taking the power to land.

On the other hand, a large number of marine installations for other purposes has been developed over the years, perhaps especially in the field of oil extraction from underwater wells. Multiple installations are known for this type of application, for example, floating platforms, see, for example, WO-A-97/45318 and WO-A-01/03999. For example, US-A-6196322 describes an underwater installation intended for the drilling and production at sea of oil and/or gas wells in more or less deep water, comprising a submersible body in equilibrium which is anchored in the seabed and which is located between the bottom of the sea and the surface.

WO 2007/009464 and GB 1 492 427 disclose examples of marine installation for power production.

Other marine installations and platforms are known through, for example, ES-U-292854 (which describes a remotely operated marine platform) and ES-A-2244346 (which reflects a submersible tray with tanks providing it with a thrust and which is fixed in the seabed by means of tendons or mooring lines).

### Description of the Invention

A first aspect of the invention relates to an interconnection system for the electric interconnection between at least one electric power generator (for example, a wind generator, a system for capturing energy from waves, a device for capturing energy from currents, etc.) and an electric power transfer system (the term "electric power transfer system" must be interpreted in a broad manner and can include any system for transmitting or distributing the electric power generated at a site, for example, in a generator located in the sea, to, for example, a land power distribution system; the power transfer system typically comprises at least one underwater electric cable and its possible connection interfaces). The interconnection system comprises:
- at least one floating device configured to be able to be submersed with positive floatability (i.e., such that the device tends to emerge towards the surface of the sea or of the lake in which it is submersed);
- an anchorage subsystem configured to anchor the floating device in the marine bottom (the marine bottom must be interpreted in a broad manner: it can be the bottom of the sea, but also the bottom of a lake or any other flooded area), such that it is located at a distance from the surface of the sea (or of the lake); and
- an electric interconnection subsystem configured to interconnect said at least one electric power generator and the electric power transfer system, said electric interconnection subsystem being associated with the floating device. For example, the electric interconnection subsystem can be in direct contact with the floating device, for example, it can be mechanically coupled to the floating device, or it can form an integral part of the floating device.

Thus, due to the positive floatability or excess of floatability, the floating device tends towards the marine surface, such that it tensions the cables, tubes or other types of "tendons" of the anchorage system, such that the device is located at certain level, normally at a certain (and sufficient) distance from the surface of the sea to not be affected (or substantially affected) by movements of the water caused by, for example, bad weather, and/or to not be affected by the tides. At the same time, an excess of movement in the horizontal direction can be prevented. In other words, the anchorage system together with the excess of floatability assure that the device remains at least approximately in a determined position. It is thus achieved that the electric interconnection subsystem likewise remains in that position, facilitating the setup of the interconnection and assuring, with a certain reliability, the maintenance of this interconnection.

Due to the floatability of the floating device it is possible, for example, to carry out the interconnection between the electric cables coming from the electric generators, sometimes referred to as "umbilical cables", to the electric interconnection subsystem, at the surface or relatively close to the surface, avoiding complex works at great depth. For example, the floating device can be located close to the surface of the sea, at a sufficient depth so that it is not affected by the inclemency of the weather, which serves for it not to experience damage in the event of, for example, storms, but at sufficiently little depth for the divers to be able to easily access the device in order to carry out, for example, cable connection and/or disconnection works, and/or maintenance works.

The positive floatability of the floating device makes, in the event of using vertical cables or tubes (or the like) for fixing the floating device to the marine bottom, a pre-tensioning of said cables or tubes occur, whereby a movement of the floating device in the vertical direction, as well as rotations with horizontal axes, and also a substantial horizontal movement of the floating device, are prevented.

The interconnection system can thus be installed, uninstalled and handled very easily, with normal ships and without needing robots or special equipment.

The floating device can comprise at least one flotation tank. In other words, the floating device can comprise one or more flotation tanks, for example, flood tanks, for example, radial flood tanks. The floating device can additionally comprise means for controlling the floatability of the floating device by means of a control of the state of said at least one flotation tank. Said means for controlling the floatability can comprise one or several valves through which the entrance and/or exit of water or gas can be controlled to drain or fill these tanks, as is common in this type of device. The controlled emersion and submersion of the device, for example, can thus be carried out.

The anchorage subsystem can comprise a plurality of tendons for attaching the floating device to at least one anchorage device. "Tendons" are understood as any element which serves to attach the floating device with one or several "anchors" or the like located in and/or on the marine bottom; examples of "tendons" conventionally used for positioning marine platforms are cables and tubes that are more or less flexible, for example, of steel. On the other hand, anchorage device is understood as any device suitable for being fixed in and/or on the marine bottom: examples of an anchorage device can be: one or several piles driven under pressure into the marine bottom; suction systems, such as suction caissons or cylinders; mixed suction and vertical anchor systems; planar anchors allowing a vertical pull; etc. The tendons can extend in a substantially vertical manner between the anchorage device and the floating device.

The electric interconnection subsystem can be housed in a watertight casing having at least one watertight inlet for at least one underwater electric cable, such that said at least one underwater electric cable can enter inside the casing and be connected to the electric interconnection subsystem inside the casing. Thus, the underwater electric cable, which is the (or which forms part of the) electric power transfer system, can be connected to the electric interconnection subsystem inside the casing or "box" of the electric interconnection subsystem, in a watertight environment.

The electric interconnection subsystem can be attached to the floating device, for example, the electric interconnection subsystem can be removably attached to the floating device, such that when the system is in use, the electric interconnection subsystem can be raised to the surface. This allows raising the electric interconnection subsystem, which can be seen as a type of "connection box", to the surface of the sea or of the lake in order to there carry out the connection, disconnection and/or maintenance operations which are to be carried out, without having to raise the actual floating device.

The electric interconnection subsystem can be located in the upper part of the floating device. Therefore, cables coming from one or more electric generators can be connected to the electric interconnection subsystem, inside or outside the floating device, and thus set up a connection with the underwater electric cable, which can be a cable with the capacity to transport electric power coming from a plurality of generators. The fact that the electric connection subsystem -or "interconnection box"- is located in the upper part of the device can facilitate the work for connecting the "umbilical" cables coming from the electric generators to said "interconnection box", both when the floating device is in an emerged position and when it is submersed.

Another aspect of the invention relates to an installation for power generation in the sea, comprising:
- at least one electric power generator (for example, one or several wind generators or devices for capturing energy of waves and/or currents);
- at least one electric power transfer system comprising at least one underwater electric cable.

According to this aspect of the invention, said at least one electric power generator is connected to said at least one underwater electric cable through an interconnection system according to what has been described above.

The installation can comprise a plurality of electric power generators, said plurality of electric power generators being connected to the same underwater electric cable through the same interconnection system.

In the installation, the floating device of the interconnection system can be located at a distance X below the surface of the sea and at a distance Y above the marine bottom, X>5 m, Y>0 m. In an embodiment of the invention, Y> 10 m, for example, Y> 100 m.

X can be chosen such that the floating device is sufficiently below the surface of the sea so that it is sufficiently protected from phenomena such as storms, swell, etc. The distance Y depends on the depth of the sea at the site at which the floating device is located and on the distance X. Generally, Y can have any value, but in many cases Y can be greater or even much greater than 10 m and can be greater than 100 m, i.e., the floating device can be located at a height of more than 10 meters, or even of more than 100 meters, or more, on the marine bottom. In many cases, Y can be substantially greater than X, since it can be convenient for the floating device to be far from the marine bottom and located in a certain proximity to the surface of the sea to facilitate the access to the device, in the event that the electric connections, for example, have to be handled. Furthermore, with the device located close to the surface of the sea the reflotation maneuvers can be performed more easily in the event that it is necessary to replace the device or the electric interconnection subsystem and/or carry out repair or maintenance operations on any of them.

Another aspect of the invention relates to a method for transferring electric power from an electric power generator located in the sea to a land system for power distribution, through at least one underwater electric cable, in which the electric power generator is connected to the underwater electric cable through an interconnection system according to what has been described above.

### Description of the Drawings

To complement the description and for the purpose of aiding to better understand the features of the invention according to a preferred practical embodiment thereof, a set of drawings is attached as an integral part of the description in which the following has been depicted with an illustrative and non-limiting character:
Figure 1 shows a schematic side elevational view of a system and installation according to a possible embodiment of the invention.
Figure 2 shows a schematic perspective view of the system according to this embodiment of the invention.
Figure 3 shows a schematic plan view of a part of the system according to this embodiment of the invention.
Figure 4 shows a schematic side elevational view of the casing of the electric interconnection subsystem in this embodiment of the invention.
Figures 5A and 5B show a schematic vertical cross section (5A) and horizontal cross section (5B) view of a floating device according to this embodiment of the invention.
Figure 6 shows a vertical cross section view of a flotation tank, with regulating valves.

### Preferred Embodiment of the Invention

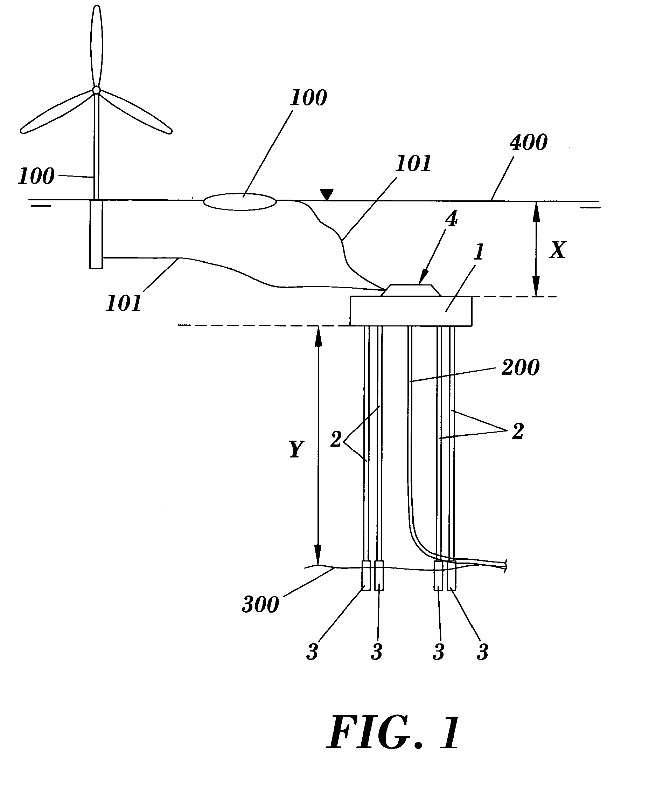

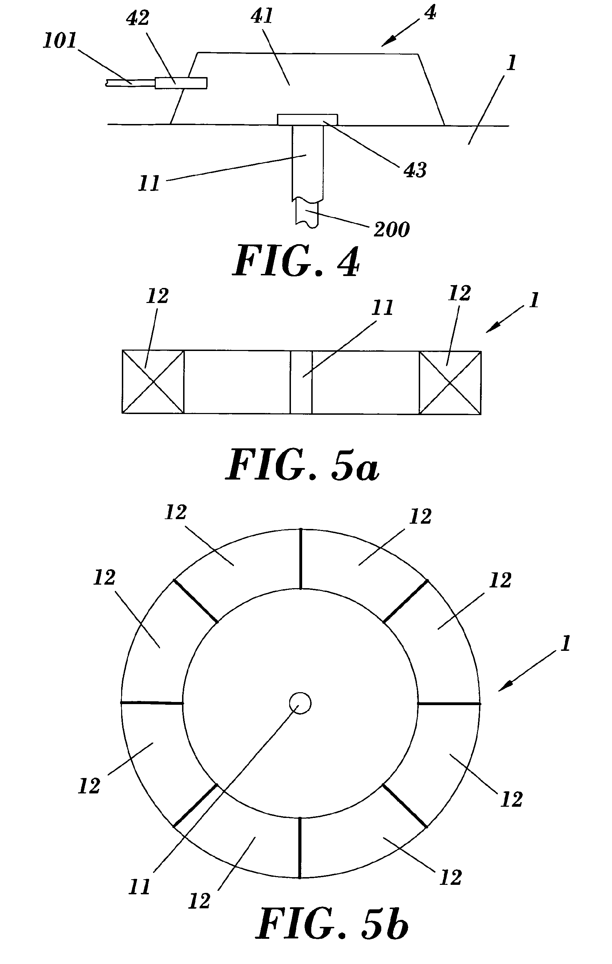

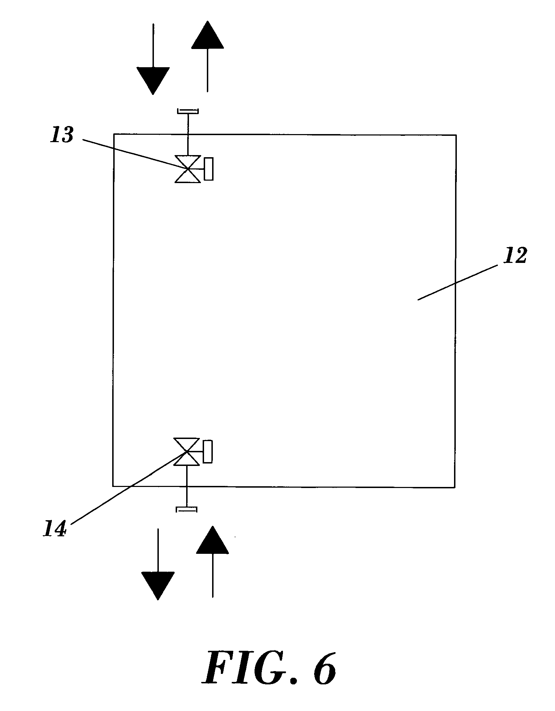

In Figures 1-3 it can be observed how the invention, in a preferred embodiment, comprises a substantially cylindrical floating device (1) containing flotation tanks (radial flood tanks) (12) (see Figures 5A and 5B, which show the arrangement of said radial tanks in a possible configuration of the floating device, with a passage area 11 through which an underwater cable (200) can pass) associated with a valve system (for example, as shown in Figure 6, with air inlet valves (13) in the upper part of each tank (12), and with water inlet valves (14) in the lower part of each tank (12) which allow varying the liquid ballast and thus regulating the floatability of the device. These tanks can serve to achieve carrying out the immersion and emersion maneuvers in a controlled manner, with the variation of the suitable ballast which is controlled with the opening and closing of valves (13, 14) according to the ballast needs required. It can also have an internal sounder system so that the level of the ballast is known at all times.

The configuration and the dimensions of the floating device are chosen so that the need for housing the electric interconnection subsystem (4) placed against -for example, in a removable manner- on the upper face of the floating device (1) is fulfilled and so that the floating device (1) provides the necessary tension to the tendons (2) attaching the floating device (1) to the anchorage devices (3). The device is designed to remain mainly in a submersed situation at the design level to thus resist even extreme weather conditions and to be capable of remaining floating by itself, if necessary, with a minimal freeboard (distance from the free surface of the sea to the deck of the platform of the floating device): when the platform is floating it is convenient for it to have a minimal freeboard preventing the waves from reaching the deck (at least in favorable weather conditions), this is to facilitate the work on board and, furthermore, so that for small transverse and longitudinal oscillation angles (heeling and pitching angles, respectively) the stability of the platform is ensured and the latter does not overturn due to the effect of the shipped water.

The immersion-emersion maneuvers are normally not carried out in extreme weather conditions since in many cases the floating device can be prepared to withstand these conditions only when it is submersed. In these cases, it is installed and uninstalled in milder weather periods (weather windows).

Internal structures and supports allowing the tension exerted by the tendons (2) to not jeopardize the integrity of the floating device (1) are housed inside the floating device. The device can also have signaling and/or communication means so that its position can be remotely verified.

The internal structural arrangement can consist of flood tanks which allow carrying out the immersion and emersion maneuver by means of compressed air devices or with ballast and deballast pumps. Said devices can be integrated in the actual structure of the floating device but it is also possible to use external ballast and deballast means provided by support ships.

The tendons (2) or mooring lines can be, for example, steel cables or steel tubes, designed to withstand the necessary design tension to prevent an excessive horizontal excursion. They can be connected to the anchorage devices (3) and to the floating device (1) by means of conventional connectors.

In relation to the anchorage, there are multiple options, for example, the following:
- Piles driven under pressure, for example, from the surface with hydraulic or pneumatic hammers which gradually introduce the piles in the bottom of the sea.
- Suction systems, for example, suction caissons or cylinders which by means of pumps generate a pressure difference between the marine bottom and the inner part of the cylinder which makes the latter be introduced in the marine bed.
- Mixed suction and vertical anchor systems in which an anchor is housed inside a suction cylinder. This cylinder is injected into the marine bottom for the purpose of locating the anchor at a fixed depth. Once this operation has been carried out, the cylinder can be recovered to install other anchors.
- Planar anchors, similar to gravity anchors, traditional in ships, but with the difference that they have a mechanism which in the instant of being fixed to the floor allows the vertical pull.
- Etc.

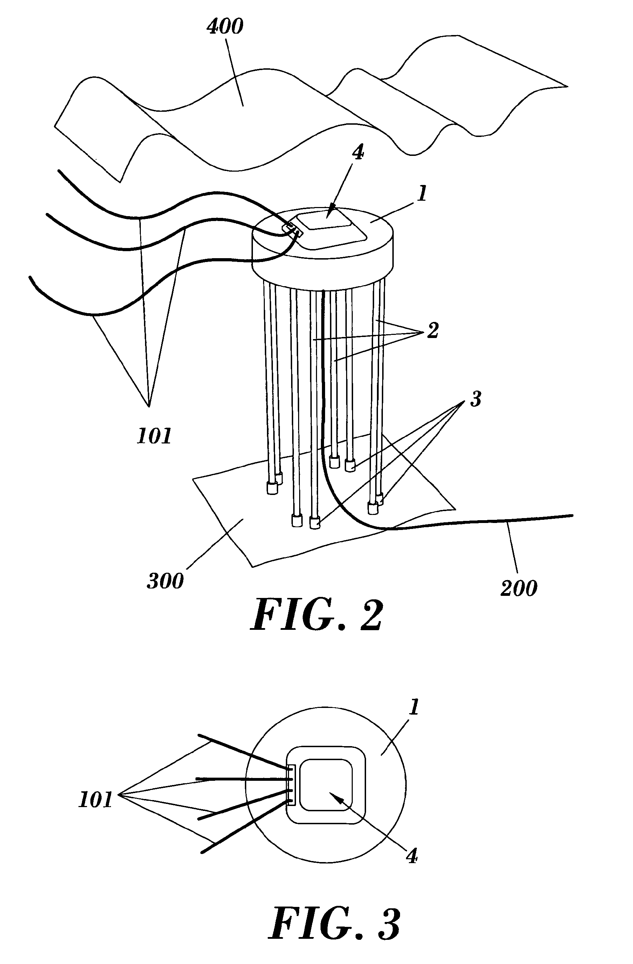

Figures 1 and 2 show how the anchorage devices (3) are introduced in the marine bottom or bed (300) and how the tendons (2) rise vertically to the floating device (1), such that this floating device (1) is located at a distance X below the surface of the sea (400), and, therefore, safe from the influences of bad weather, and, at the same time, at a distance Y on the marine bottom (300). For example, the distance X can be fixed according to the desires of the people who manage the connection between the electric power generators (100) and the electric power transfer system (200), and the floating device can then be sized and designed according to said distance X, or the distance X can be chosen according to the features of an already designed floating device. The distance X must be chosen such that the risk of the floating device and the elements associated therewith experiencing damages, for example, due to bad weather or due to the impact of ships, etc., is reduced to zero or, at least, to an acceptable level.

On the other hand, and as can be seen in Figure 4, the electric interconnection subsystem (4) is basically a type of connection box with a structure or casing (41) inside which electric connection means adapted for marine environments (these means as such can be conventional) are housed. On one hand, the connection box (4) can have connectors (42) integrated in its casing (41) or outer lining which allow the connection from the outside of the umbilical cables (101) coming from the electric power generators (100) and at least one connector for the static or quasi-static underwater connector (200) for the transport of the electric power to land. In Figure 4 it can be observed how the underwater cable (200) traverses an area (11) or conduit traversing the floating device (1), to be introduced in the casing (41) through the lower part thereof, through a watertight inlet (43).

One option can be that of carrying out the connection of the umbilical cables (101) and/or underwater cable (200) "in dry conditions", in which case it can be necessary to refloat the connection box (with or without the floating device). However, another option can be carrying out the connection with the submersed box, in which case it would not be necessary to refloat it. The connection box (4) can be arranged on the deck of the floating device (1) and its dimensions can be selected according to the number of cables for which it is sized (i.e., the dimensions can vary according to the connectors (42) that it has). The electric interconnection subsystem (4) can be removably coupled to the floating device, such that it can be refloated when the connection/disconnection of the electric power generators and/or another type of maintenance operation is to be carried out, without needing to make the floating device (1) emerge.

As can be seen in Figure 4, the underwater cable (200) -or a connection interface associated with said cable- can access the inside of the floating device (1) (and from there the electric interconnection subsystem, for example, through a watertight inlet (43) in the box in which said subsystem is housed), to be connected to the electric interconnection subsystem (4) inside the floating device (1). However, it can also be directly connected to the electric interconnection subsystem in any external position with respect to the floating device.

Figure 1 schematically shows two generators (100), a wind generator and an electric power generator from the movement of waves. However, the invention can logically be applied to any power generator, and to any number and combination of generators.

In this text, the word "comprises" and its variants (such as "comprising", etc.) must not be interpreted in an exclusive manner, i.e., they do not exclude the possibility that what has been described includes other elements, steps, etc.

On the other hand, the invention is not limited to the specific embodiments which have been described but also covers, for example, the variants which can be carried out by the person having ordinary skill in the art (for example, in relation to the choice of materials, dimensions, components, configuration, etc.) within what is inferred from the claims.

## Claims

1. Interconnection system for the electric interconnection between at least one electric power generator (100) and an electric power transfer system (200), comprising:
at least one floating device (1);
an anchorage subsystem (2, 3) configured to anchor the floating device in the marine bottom; and
an electric interconnection subsystem (4) configured to interconnect said at least one electric power generator (100) and the electric power transfer system (200), said electric interconnection subsystem (4) being associated with the floating device (1);
**characterized in that**
said at least one floating device (1) is configured to be able to be submersed with positive floatability;
**in that**
said anchorage subsystem (2, 3) is configured to anchor the floating device in the marine bottom such that it is located at a distance from the surface of the sea;
**in that**
the floating device (1) comprises at least one flotation tank (12);
and **in that**
the floating device (1) additionally comprises means (13, 14) for controlling the floatability of the floating device by means of a control of the state of said at least one flotation tank (12).

2. Interconnection system according to claim 1, wherein the anchorage subsystem comprises a plurality of tendons (2) for attaching the floating device to at least one anchorage device (3).

3. Interconnection system according to any of the previous claims, wherein the electric interconnection subsystem is housed in a watertight casing (41) having at least one watertight inlet (43) for at least one underwater electric cable (200), such that said at least one underwater electric cable (200) can enter inside the casing (41) and be connected to the electric interconnection subsystem (4) inside the casing (41).

4. Interconnection system according to any of the previous claims, wherein the electric interconnection subsystem (4) is attached to the floating device (1).

5. Interconnection system according to claim 4, wherein the electric interconnection subsystem (4) is removably attached to the floating device (1), such that when the system is in use, the electric interconnection subsystem (4) can be raised to the surface.

6. Interconnection system according to any of claims 4 and 5, wherein the electric interconnection subsystem (4) is located in the upper part of the floating device (1).

7. Installation for power generation in the sea, comprising:
at least one electric power generator (100); and
at least one electric power transfer system (200) comprising at least one underwater electric cable;
said at least one electric power generator (100) being connected to said at least one underwater electric cable (200) through an interconnection system according to any of claims 1-6.

8. Installation according to claim 7, comprising a plurality of electric power generators (100), said plurality of electric power generators being connected to the same underwater electric cable (200) through the same interconnection system.

9. Installation according to any of claims 7 and 8, wherein the floating device (1) of the interconnection system is located at a distance X below the surface of the sea and at a distance Y above the marine bottom, X>5 m, Y>0 m.

10. Installation according to claim 9, wherein Y> 10 m.

11. Method for transferring electric power from an electric power generator (100) located in the sea to a land system for power distribution through at least one underwater electric cable (200), wherein the electric power generator (100) is connected to the underwater electric cable (200) through an interconnection system according to any of claims 1-6.

## Patentansprüche

1. Verbindungssystem für die elektrische Verbindung zwischen zumindest einem Stromgenerator (100) und einem Stromübertragungssystem (200), umfassend:
zumindest eine schwimmende Einrichtung (1);
ein Verankerungsteilsystem (2,3), das ausgestaltet ist, um die schwimmende Einrichtung in Meeresgrund zu verankern; und
ein Teilsystem (4) zur elektrischen Verbindung, das ausgestaltet ist, um den zumindest einen Stromgenerator (100) und das Stromübertragungssystem (200) zu verbinden, wobei das Teilsystem (4) zur elektrischen Verbindung der schwimmenden Einrichtung (1) zugeordnet ist;
**dadurch gekennzeichnet, dass**
die zumindest eine schwimmende Einrichtung (1) derart ausgestaltet ist, dass mit konstruktiver Schwimmfähigkeit untergetaucht sein kann;
dass das Verankerungsteilsystem (2, 3) ausgestaltet ist, um das schwimmende Teilsystem im Meeresgrund derart zu verankern, dass es sich in einem Abstand von der Meeresoberfläche befindet;
dass die schwimmende Einrichtung (1) zumindest einen Schwimmtank (12) umfasst;
und dass die schwimmende Einrichtung (1) zusätzlich Mittel (13, 14) zum Steuern der Schwimmfähigkeit der schwimmenden Einrichtung mittels einer Steuerung des Zustandes des zumindest einen Schwimmtanks (12) umfasst.

2. Verbindungssystem nach Anspruch 1, wobei das Verankerungsteilsystem eine Mehrzahl von Spannkabeln (2) zum Anbringen der schwimmenden Einrichtung an der zumindest einen Verankerungseinrichtung (3) umfasst.

3. Verbindungssystem nach einem der vorhergehenden Ansprüche, wobei das Teilsystem zur elektrischen Verbindung in einem wasserdichten Gehäuse (41) untergebracht ist, das zumindest einen wasserdichten Einlass (43) für zumindest ein Unterwasserelektrokabel (200) umfasst, so dass das zumindest eine Unterwasserelektrokabel (200) in das Gehäuse (41) eintreten und mit dem Teilsystem (4) zur elektrischen Verbindung innerhalb des Gehäuses (41) verbunden sein kann.

4. Verbindungssystem nach einem der vorhergehenden Ansprüche, wobei das Teilsystem (4) zur elektrischen Verbindung an der schwimmenden Einrichtung (1) angebracht ist.

5. Verbindungssystem nach Anspruch 4, wobei das Teilsystem (4) zur elektrischen Verbindung abnehmbar an der schwimmenden Einrichtung (1) angebracht ist, so dass, wenn das System im Gebrauch ist, das Teilsystem (4) zur elektrischen Verbindung an die Oberfläche angehoben werden kann.

6. Verbindungssystem nach einem der Ansprüche 4 und 5, wobei das Teilsystem (4) zur elektrischen Verbindung in dem oberen Teil der schwimmenden Einrichtung (1) angeordnet ist.

7. Anlage zur Stromerzeugung auf dem Meer, umfassend:
zumindest einen Stromgenerator (100); und
zumindest ein Stromübertragungssystem (200), das zumindest ein Unterwasserelektrokabel umfasst;
wobei der zumindest eine Stromgenerator (100) mit dem zumindest einen Unterwasserelektrokabel (200) durch ein Verbindungssystem nach einem der Ansprüche 1-6 verbunden ist.

8. Anlage nach Anspruch 7, die eine Mehrzahl von Stromgeneratoren (100) umfasst, wobei die Mehrzahl von Stromgeneratoren mit dem gleichen Unterwasserelektrokabel (200) durch das gleiche Verbindungssystem verbunden ist.

9. Anlage nach einem der Ansprüche 7 und 8, wobei die schwimmende Einrichtung (1) des Verbindungssystems in einem Abstand X unter der Meeresoberfläche und in einem Abstand Y über dem Meeresgrund angeordnet ist, X>5m, Y>0m.

10. Anlage nach Anspruch 9, wobei Y>10m.

11. Verfahren zum Übertragen elektrischen Stromes von einem Stromgenerator (100), der auf dem Meer angeordnet ist, zu einem Landsystem zur Stromverteilung durch zumindest ein Unterwasserelektrokabel (200), wobei der Stromgenerator (100) mit dem Unterwasserelektrokabel (200) durch ein Verbindungssystem nach einem der Ansprüche 1-6 verbunden ist.

## Revendications

1. Système d'interconnexion pour l'interconnexion électrique entre au moins un générateur d'énergie électrique (100) et un système de transfert d'énergie électrique (200), comprenant :
au moins un dispositif flottant (1) ;
un sous-système d'ancrage (2, 3) configuré pour ancrer le dispositif flottant dans le fond marin ; et
un sous-système d'interconnexion électrique (4) configuré pour interconnecter ledit au moins un générateur d'énergie électrique (100) et le système de transfert d'énergie électrique (200), ledit sous-système d'interconnexion électrique (4) étant associé au dispositif flottant (1) ;
**caractérisé en ce que** :
ledit au moins un dispositif flottant (1) est configuré pour pouvoir être immergé avec une flottabilité positive ;
**en ce que** :
ledit sous-système d'ancrage (2, 3) est configuré pour ancrer le dispositif flottant dans le fond marin de sorte qu'il est positionné à une distance de la surface de la mer ;
**en ce que** :
le dispositif flottant (1) comprend au moins un flotteur (12) ;
et **en ce que** :
le dispositif flottant (1) comprend, de plus, des moyens (13, 14) pour contrôler la flottabilité du dispositif flottant au moyen d'un contrôle de l'état dudit au moins un flotteur (12).

2. Système d'interconnexion selon la revendication 1, dans lequel le sous-système d'ancrage comprend une pluralité de tendons (2) pour fixer le dispositif flottant au au moins un dispositif d'ancrage (3).

3. Système d'interconnexion selon l'une quelconque des revendications précédentes, dans lequel le sous-système d'interconnexion électrique est logé dans un boîtier étanche à l'eau (41) ayant au moins une entrée étanche à l'eau (43) pour au moins un câble électrique sous-marin (200), de sorte que ledit au moins un câble électrique sous-marin (200) peut entrer à l'intérieur du boîtier (41) et être raccordé au sous-système d'interconnexion électrique (4) à l'intérieur du boîtier (41).

4. Système d'interconnexion selon l'une quelconque des revendications précédentes, dans lequel le sous-système d'interconnexion électrique (4) est fixé sur le dispositif flottant (1).

5. Système d'interconnexion selon la revendication 4, dans lequel le sous-système d'interconnexion électrique (4) est fixé de manière amovible au dispositif flottant (1), de sorte que lorsque le système est utilisé, le sous-système d'interconnexion électrique (4) peut être levé à la surface.

6. Système d'interconnexion selon l'une quelconque des revendications 4 et 5, dans lequel le sous-système d'interconnexion électrique (4) est positionné dans la partie supérieure du dispositif flottant (1).

7. Installation pour générer de l'énergie en mer, comprenant :
au moins un générateur d'énergie électrique (100) ; et
au moins un système de transfert d'énergie électrique (200) comprenant au moins un câble électrique sous-marin ;
ledit au moins un générateur d'énergie électrique (100) étant raccordé audit au moins un câble électrique sous-marin (200) par le biais d'un système d'interconnexion selon l'une quelconque des revendications 1 à 6.

8. Installation selon la revendication 7, comprenant une pluralité de générateurs d'énergie électrique (100), ladite pluralité de générateurs d'énergie électrique étant raccordée au même câble électrique sous-marin (200) par le biais du même système d'interconnexion.

9. Installation selon l'une quelconque des revendications 7 et 8, dans laquelle le dispositif flottant (1) du système d'interconnexion est positionné à une distance X au-dessous de la surface de la mer et à une distance Y au-dessus du fond marin, X > 5 m, Y > 0 m.

10. Installation selon la revendication 9, dans laquelle Y > 10 m.

11. Procédé pour transférer l'énergie électrique d'un générateur d'énergie électrique (100) positionné dans la mer à un système terrestre pour la distribution d'énergie par au moins un câble électrique sous-marin (200), dans lequel le générateur d'énergie électrique (100) est raccordé au câble électrique sous-marin (200) par le biais d'un système d'interconnexion selon l'une quelconque des revendications 1 à 6.
